## Europäisches Patentamt

(19) **European Patent Office**

**Office européen des brevets**

(11) Publication number: **0 111 010**
**B1**

(12) **EUROPEAN PATENT SPECIFICATION**

(45) Date of publication of patent specification: **16.08.89**

(21) Application number: **83901732.4**

(22) Date of filing: **04.06.83**

(86) International application number:
**PCT/JP83/00183**

(87) International publication number:
**WO 83/04329 08.12.83 Gazette 83/28**

(51) Int. Cl.⁴: **G 11 B 7/00** // G11B19/12

(54) **OPTICAL DISC REPRODUCER.**

(30) Priority: **04.06.82 JP 95753/82**
**04.06.82 JP 95754/82**

(43) Date of publication of application:
**20.06.84 Bulletin 84/25**

(45) Publication of the grant of the patent:
**16.08.89 Bulletin 89/33**

(84) Designated Contracting States:
**DE FR GB NL**

(56) References cited:
**EP-A-0 020 199**
**BE-A- 892 274**
**GB-A-2 061 072**
**GB-A-2 099 203**
**JP-A-55 038 663**
**JP-A-56 051 061**

**PATENTS ABSTRACTS OF JAPAN, vol. 6, no. 41 (P-106) 919r, March 13, 1982; & JP - A - 56 159 846 (MATSUSHITA DENKI SANGYO K.K.) 09.12.1981**

**PATENTS ABSTRAVCTS OF JAPAN, vol. 1, no. 37 (E-76) 2127r, April 18, 1977, page 2127 E 76; & JP - A - 51 134 607 (HITACHI SEISAKUSHO K.K.) 22.11.1976**

(73) Proprietor: **SONY CORPORATION**
**7-35 Kitashinagawa 6-Chome Shinagawa-ku Tokyo 141 (JP)**

(72) Inventor: **KATSUYAMA, Akira Shibaura Plant, Sony Corporation**
**7-4, Konan 1-chome Minato-ku Tokyo 108 (JP)**
Inventor: **KIMURA, Shuichi Shibaura Plant, Sony Corporation**
**7-4, Konan 1-chome Minato-ku Tokyo 108 (JP)**

(74) Representative: **Thomas, Christopher Hugo et al**
**D Young & Co 10 Staple Inn London WC1V 7RD (GB)**

(56) References cited:
**IBM TECHNICAL DISCLOSURE BULLETIN, vol. 23, no. 8, January 1981, page 3567, Armonk, N.Y., US; W.B. OTT et al.: "Auto-retry apparatus for diskette controllers"**

**PATENTS ABSTRACTS OF JAPAN, vol. 7, no. 224 (P-227) 1369r, Oktober 5, 1983; & JP - A - 58 114 354 (MATSUSHITA DENKI SANGYO K.K.) 07.07.1983**

Courier Press, Leamington Spa, England.

**Description**

This invention relates to optical disc players.

There has been proposed a digital audio disc having recorded thereon audio signals in the form of pulse-coded signals formed as a series of pits, which can be optically read to reproduce the recorded audio signals. Japanese patent specification JP-A-55-38663 discloses an optical video player with means for detecting whether or not a disc is loaded thereon.

Unlike gramophone records, most digital audio discs available are "one-sided", having only one information-record surface (hereinafter referred to as the "face") with the opposite non-information-recorded surface (hereinafter referred to as the "back") bearing a label which indicates the titles of recorded music and other data. It is therefore possible for an operator to place such a digital audio disc into an optical disc player upside down. The disc player cannot then be brought into a playback starting condition, that is, a state of normal preliminary focusing operation.

One proposed way of determining whether the disc is loaded properly or not on the disc player is to employ optical detecting means for discriminating the face from the back of the disc, in addition to an optical pick-up means for reading the pits formed on the disc. In such a case, the optical detecting means emits a detecting beam of light onto the disc and detects a beam of light reflected from the disc. Since the back of the disc is an unreflecting surface bearing a label, little or no light is reflected from the back of the disc upon exposure to the detecting light beam, and improper loading can be detected.

However, it is not always possible to discriminate accurately the face of a disc from the back thereof, as the backs of discs of different kinds may have different light reflectivities.

According to the present invention there is provided an optical disc player comprising a preliminary focus control circuit for repeatedly effecting preliminary focus control to bring a focusing control circuit arrangement for a beam of light falling on a disc into a mode of focus control operation;

characterised by:

detecting means for detecting repeated failure to achieve said mode of focus control operation;

whereby an instance in which said disc is loaded with said beam of light falling on a non-information-recorded surface thereof can be detected on the basis of an output signal from said detecting means.

The invention will now be described by way of example with reference to the accompanying drawings, throughout which like parts are referred to by like references, and in which:

Figure 1 is a diagram of a preliminary focus control circuit;

Figures 2 and 3 are diagrams for explaining the operation of the circuit of Figure 1;

Figure 4 is a diagram of part of an embodiment of optical disc player according to the present invention; and

Figures 5 and 6 are diagrams showing parts of other embodiments.

The preliminary focus control circuit which can be incorporated in embodiments of optical disc player according to the present invention will first be described.

Signals recorded with a series of pits on a disc such as a digital audio disc can be reproduced by reading the pits with, for example, optical reading means, that is, an optical pick-up. For example, a laser beam emitted from the pick-up falls on the pits on the disc, and a reflected laser beam which is modulated in intensity by the pits is received by the pick-up to be converted into electric signals. The pick-up has a photodetector for detecting the focus condition and which generates a focus error voltage for effecting focus control to focus the laser beam correctly on the recorded surface of the disc at all times. More specifically, the focus control is carried out with a focus control circuit arrangement in which a focus drive signal based on the focus error voltage is applied to focus adjusting means which adjusts, for example, the distance of an objective lens of the pick-up from the recorded surface of the disc. For the focus control circuit arrangement to perform the focus control, it is necessary that the objective lens be positioned in a certain distance range from the recorded surface of the disc to bring the laser beam into a relatively narrow range of defocused condition around the just-focused condition. To meet such a requirement, a preliminary focus control circuit is provided for causing the laser beam to be in such a narrow range of defocused condition, as to bring the focus control circuit arrangement into a mode of focus control operation.

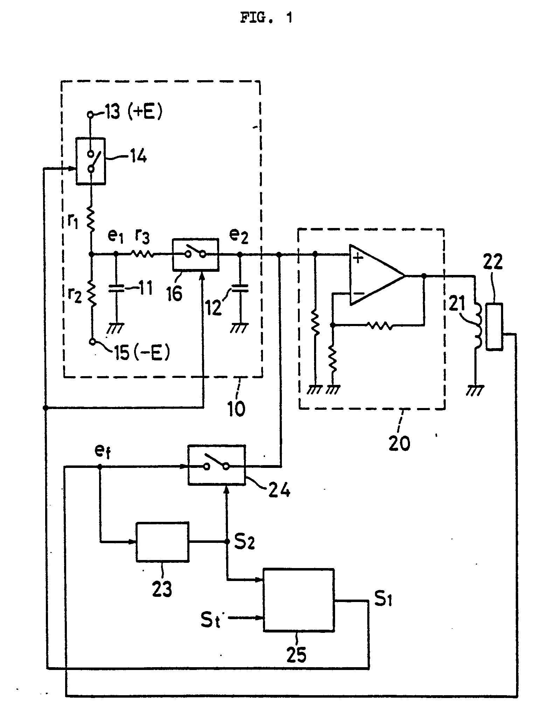

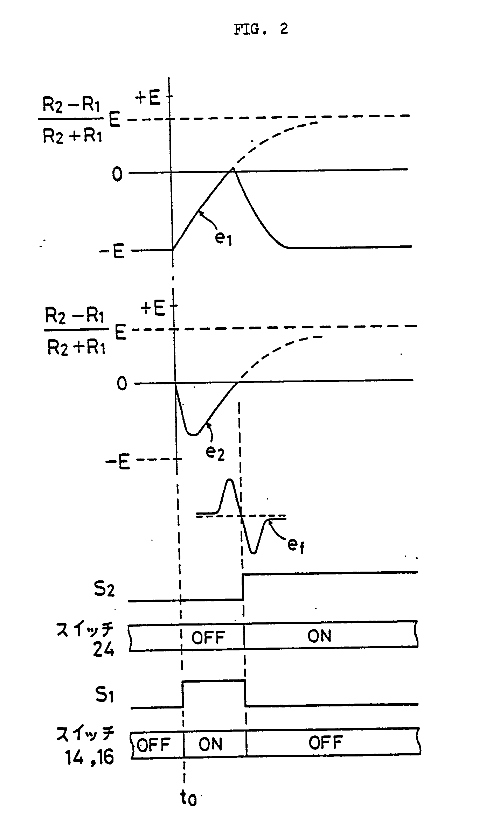

In the preliminary focus control circuit of Figure 1, a voltage generating circuit 10 generates a preliminary focus control voltage which is variable to change the distance between the objective lens of the pick-up and the recorded surface of the disc for varying a focusing condition of a light beam. When the objective lens enters a certain distance range so that the focus control circuit arrangement can be brought into the mode of focus control operation, it is preferable that the focusing condition be varied slowly for smoothly switching from the preliminary focussing condition into the focus control condition. To this end, the voltage generating circuit 10 produces as the preliminary focus control voltage a voltage e2 (Figure 2) which, after a preliminary focusing operation starting time t0, sharply changes to a negative value from earth potential, and then gradually changes through the earth potential up to a positive value.

To produce such a voltage, the voltage generating circuit 10 has two capacitors 11 and 12 each having one end earthed, a resistor r1 of value R1, and a switch 14 connected in series between the other end of the capacitor 11 and a terminal 13 capable of supplying a positive voltage +E, a resistor r2 of value R2 connected in series between the other end of the capacitor 11 and a terminal 15 capable of supplying a negative voltage −E, a resistor r3 of value R3, and a switch 16 connected in series between the other ends of the capacitors 11 and 12. The resistance value R1 is less than R2. When the switches 14 and 16 are turned off, a voltage e1 at the other end of the capacitor 11 is equal to the negative voltage −E, while a voltage e2 at the other end of the capacitor 12 is equal to earth potential. When the switches 14 and 16 are turned on at the time t0 shown in Figure 2, the capacitor 12 starts being charged through the resistor r3, and the voltage e2 sharply changes from the earth potential towards the negative voltage −E, which the voltage e1 took at the time t0. Since the switch 14 is also turned on at the time t0, the voltage e1 gradually varies from the negative voltage −E through the earth potential towards a positive voltage (R2 − R1)E/(R2 + R1), the voltage e2 does not reach the negative voltage −E, but instead rises gradually through earth potential towards the positive potential (R2 − R1)E/(R2 + R1). The time it takes for the voltage e2 to reach earth potential after the time t0, is selected to be in the range of from 0.3 to 0.4 second.

The switches 14 and 16 are switched by an output signal S1 from a switching control circuit 25. In response to a preliminary focusing operation starting signal St applied to the control circuit 25 at the time t0, the output signal S1 is changed from a low level to a high level, for example thereby to turn on the switches 14 and 16. Then, the preliminary focus control voltage e2 can be generated which, from the time t0 on, sharply changes from earth potential towards the negative voltage −E, and then rises gradually through earth potential towards the positive voltage (R2 − R1)E/(R2 + R1). The preliminary focus control voltage e2 is applied through a focus driving circuit 20 to a focus-adjusting means 21. An optical pick-up 22 for emitting a laser beam onto a disc, and receiving a reflected laser beam from the disc is bodily swung, or an objective lens in the pick-up 22 is swung dependent on the voltage e2 to change the laser beam focusing condition. The focusing condition varies, for example, from an over-focused condition through a just-focused condition to an under-focused condition when the voltage e2 crosses earth potential. At this time, a focus error voltage ef generated by a photodetector for detecting focus condition in the pick-up 22 varies, for example, from a positive value to a negative value as shown in Figure 2.

The focus error voltage ef is applied to a focus discriminating circuit 23 which detects a zero-crossover point where the focus error voltage ef changes from a positive value to a negative value, that is, detects a just-focusing point across which the focusing condition is shifted from an over focused condition to an under-focused condition. At the detected just focusing point, an output signal S2 from the focus discriminating circuit 23 varies from a low level to a high level. As the output signal S2 thus changes from the low level to the high level, a switch 24 is changed from off to on, and the output signal S1 from the control circuit 25 supplied with the output signal S2 changes from a high level to a low level to turn on the switches 14 and 16. The focus error voltage ef is applied as a focus driving signal via the focus driving circuit 20 to the focus adjusting means 21, so that the focus control operation is effected on the focus error voltage ef. The focus driving circuit 20, the focus adjusting means 21, the pick-up 22, the focus discriminating circuit 23, and the switch 24 jointly constitute a focus control circuit arrangement.

The voltage which sharply changes from earth potential towards the negative voltage −E and then gradually rises through earth potential to the positive voltage (R2 − R1)E/(R2 + R1), as shown in Figure 2, is normally applied once after the preliminary focusing operation starting time t0 through the focus driving circuit 20 to the focus adjusting means 21 for thereby carrying out preliminary focus control. When the focus discriminating circuit 23 detects a zero-crossover point where the focus error voltage ef varies from a positive value to a negative value, for example, the mode of focus control operation is initiated on the basis of the focus error voltage ef. If the disc is upside down in the optical disc player, then the laser beam emitted from the pick-up 22 impinges on the back of the disc. Since a label or the like is attached thereto, the pick-up 22 receives no laser beam reflected from the disc. Accordingly, the photodetector for detecting the focus condition in the pick-up 22 generates no focus error voltage ef, and hence the focus discriminating circuit 23 fails to detect any zero-crossover point where the focus error voltage ef would change from a positive value to a negative value upon elapse of a predetermined period of time after the preliminary focusing operation starting time t0. When this happens, the above preliminary focus control will be carried out again.

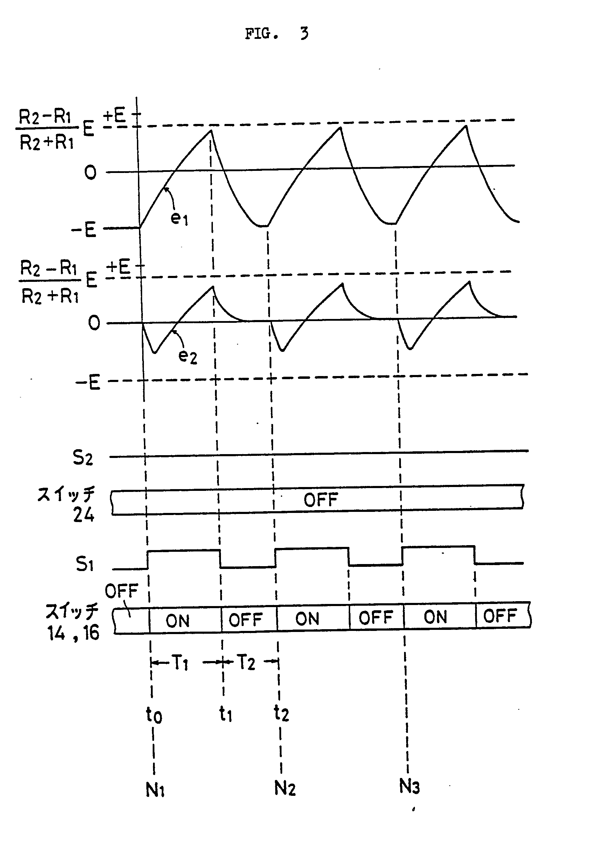

More specifically, the control circuit 25 includes a detector circuit for detecting whether or not the output signal S2 from the focus discriminating circuit 23 has varied from a low level to a high level during a fixed interval of time T1 after the preliminary focusing operation starting time t0. If the output signal S2 does not change from the low level to the high level and no focus control operation is initiated within the time interval T1 after the time t0, as shown in Figure 3, then the output signal S1 varies from the high level to the low level at a time t1 which is the time interval T1 after the time t0, thus to turn off the switches 14 and 16 in the voltage generating circuit 10. When the switches 14 and 16 are turned off, the voltage e1 at the other end of the capacitor 11 in the voltage generating circuit 10 decays to the negative voltage −E at a rate determined by a certain time constant, and the voltage e2 at the other end of the capacitor 12 also decays to earth potential at a rate determined by a certain time constant, as illustrated in Figure 3. At a time t2 upon elapse of a certain period of time T2 after the time t1, the output signal S1 varies from the low level to the high level in the same manner as that at the time t0 to turn on the switches 14 and 16 again. The voltages e1 and e2 vary again in the same manner as that from the time t0 on, and the voltage e2 is applied as the preliminary focus control voltage via the focusing driving circuit 20 to the focus adjusting means 21 for performing the foregoing preliminary focus control again. The above operation is repeated until the output signal S2 from the focus discriminating circuit 23 changes from the low level to the high level, to shift the switch 24 from the turned-off state to the turned-on state for thereby entering the mode of focus control operation.

An optical disc player with such a preliminary focus control circuit can detect an improperly loaded disc and can have a capability for automatically unloading the disc or generating a warning sound or indication.

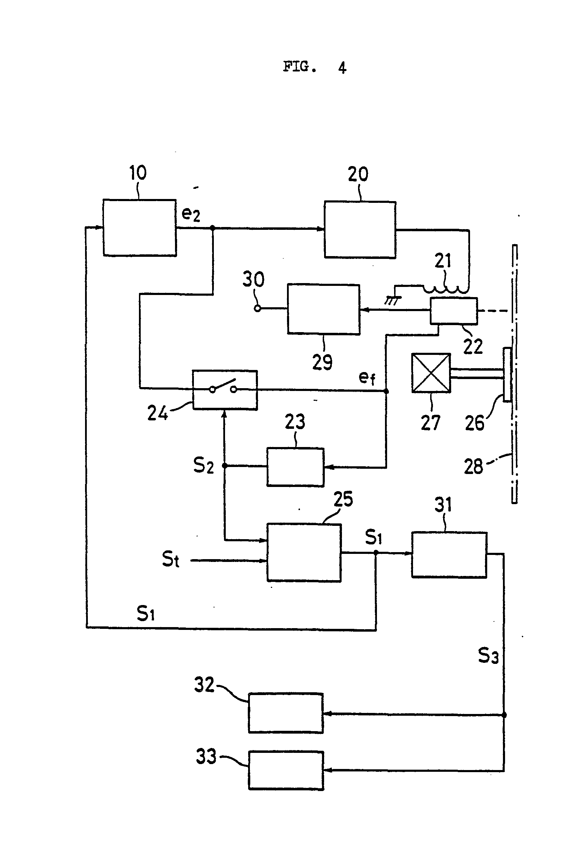

Figure 4 shows part of an embodiment of optical disc player comprising a disc table 26 rotated by a disc rotating motor 27. A disc 28 is loaded on the disc table 26 as shown by the dot-and-dash line. When the disc 28 is properly loaded for signal reproduction, signals are read from the disc 28 by the pick-up 22, and read-out signals are supplied to a signal processing circuit 29 in which they are processed to feed reproduced signals to an output terminal 30. This optical disc player also includes the voltage generating circuit 10, the focus driving circuit 20, the focus adjusting means 21, the pick-up 22, the focus discriminating circuit 23, the switch 24, and the control circuit 25, forming a preliminary focus control circuit accompanied by the focus control circuit arrangement as shown in Figure 1.

When this preliminary focus control circuit effects the foregoing preliminary focus control and no switching to the focus control operation is carried out, the preliminary focus control is repeated. Accordingly, if the disc 28 is loaded on the disc table 26 upside down, and as a result no normal laser beam is reflected from the disc 28, then the preliminary focus control is initiated at the instant at which the output signal S1 from the control circuit 25 changes from the low level to the high level, as shown in Figure 3. Since no switching to the focus control operation is carried out before the time interval T1 elapses, the output signal S1 decays from the high level to the low level. Upon elapse of the present time interval T2, the output signal S1 varies again from the low level to the high level to begin the preliminary focus control again. The foregoing cycle will be repeated. The number of positive-going edges of the output signal S1 from the control circuit 25 is therefore identical with the number of starts of the preliminary focus control.

As a consequence, the number of starts of the preliminary focus control can be determined by detecting the number of positive-going edges of the output signal S1, which are indicated by N1, N2, N3, ..., for example, in Figure 3. When the number of starts of the preliminary focus control exceeds a predetermined number, inversion of the disc 28 can be detected.

To this end, a counter 31 is connected to an output terminal of the control circuit 25, so as to be supplied with the output signal S1 from the control circuit 25. The counter 31 counts the variations of the output signal S1 from the low level to the high level, as indicated by N1, N2, N3,... in Figure 3, and supplies an output signal S3 when the count reaches a predetermined number. The output signal S3 is supplied to a disc loading mechanism 32 and a warning circuit 33. In response to the output signal S3, the disc loading mechanism 32 unloads the disc 28 from the disc table 26, and the warning circuit 33 effects a warning action such as a warning indication or a warning sound.

Accordingly, in the case where the disc 28 is loaded upside down, when the preliminary focus control is repeatedly started a predetermined number of times, for example, four times, and therefore the counter 31 counts four rising edges of the output signal S1 from the control circuit 25, it is determined that the laser beam from the pick-up 22 is falling on the back of the disc 28, and the counter 31 supplies the output signal S3. The output signal S3 then drives the disc loading mechanism 32 and the warning circuit 33. Although not shown, the output signal S3 from the counter 31 may be supplied to the voltage generating circuit 10 or the pick-up 22 to stop its operation.

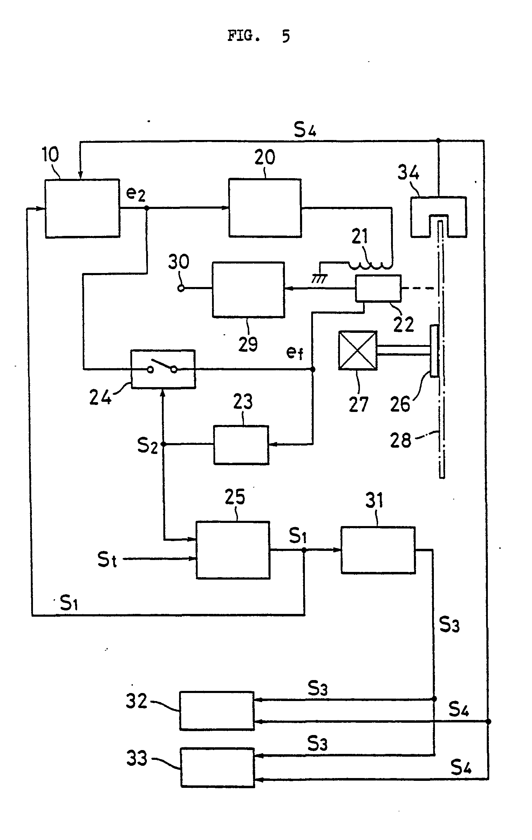

Figure 5 shows part of another embodiment of optical disc player which includes, in addition to the arrangement of Figure 4, a disc presence discriminating means 34 for detecting whether a disc 28 is loaded on the disc table 26. The discriminating means 34 comprises a light-emitting diode and a phototransistor which are disposed in confronting relation with the disc 28, if any, therebetween. If the player happens to start its operation when there is no disc 28 loaded, light emitted from the light-emitting diode is received by the phototransistor, so that the fact that there is no disc 28 loaded can be detected. A detected signal S4 which is generated by the disc presence discriminating means 34 when there is no disc 28 loaded is supplied, for example, to the voltage generating circuit 10, the disc loading mechanism 32, and the warning circuit 33. In response to the detected signal S4, the voltage generating circuit 10 does not generate the preliminary focus control voltage e2 when the output signal S1 rises from the low level to the high level, and hence the preliminary focus control is not initiated. The disc loading mechanism 32 and the warning circuit 33 are responsive to the detected signal S4 for restoring the disc table 26 to a condition capable of holding the disc 28 thereon, and for effecting a warning action, respectively. With the arrangement of Figure 5, therefore, the preliminary focusing control is performed only when the disc 28 is loaded in place, and then, whether the disc 28 is properly loaded or not is determined. If no disc 28 is loaded, then the preliminary focus control is not effected. Accordingly, any wasteful preliminary focus control is avoided.

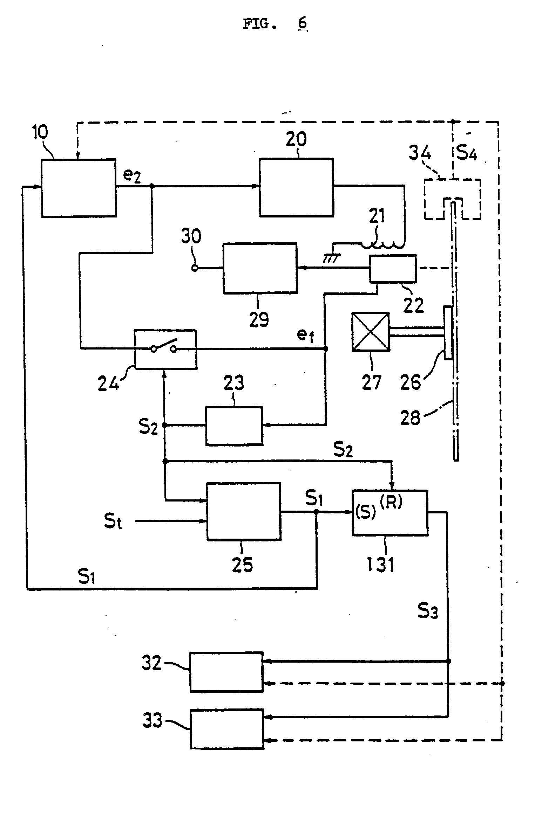

While in the embodiments shown in Figures 4 and 5, cycles of preliminary focus control are counted and the count is employed to determine whether the disc is loaded properly or not, the time required for certain cycles of preliminary focus control may be measured and the measured time may be used to determine whether the disc is loaded properly or not. Figure 6 shows part of another embodiment of optical disc player according to the present invention, which is capable of determining whether a disc is loaded properly or not by detecting the elapse of such time.

As with the embodiments of Figures 4 and 5, the embodiment of Figure 6 has the disc table 26 rotatable by the motor 27. The disc 28 is loaded on the disc table 26 as shown by the dot-and-dash line. When the disc 28 is properly loaded in place for signal reproduction, signals are read from the disc 28 by the pick-up 22, and read-out signals are supplied to the signal processing circuit 29 in which the signals are processed to feed reproduced signals to the terminal 30. This embodiment also includes the voltage generating circuit 10, the focus driving circuit 20, the focus adjusting means 21, the pick-up 22, the focus discriminating circuit 23, the switch 24, and the control circuit 25, forming the preliminary focus control circuit accompanied by the focus control circuit arrangement as shown in Figure 1.

When the preliminary focus control circuit effects the foregoing preliminary focus control and no switching to the focus control operation is carried out, the preliminary focus control is repeated. The output signal S1 from the control circuit 25 changes from the low level to the high level as shown in Figure 2 to initiate the preliminary focusing control. If a just focused condition is detected during the preliminary focus control, the output signal from the focus discriminating circuit 23 varies from the low level to the high level, whereupon switching to the focus control operation is carried out. Therefore, the rising of the output signal S2 from the low level to the high level is indicative of the ending of the preliminary focus control. The time period after the instant at which the output signal S1 from the control circuit 25 rises from the low level to the high level and before the instant at which the output signal S2 from the focus discriminating circuit 23 rises from the low level to the high level is identical to the time required for the preliminary focus control.

If the disc 28 is loaded upside down and as a result no normal laser beam is reflected from the disc 28 when the laser beam is emitted from the pick-up 22 onto the non-information-recorded surface of the disc 28, then the preliminary focus control is initiated at the instant at which the output signal S1 from the switching control circuit 25 changes from the low level to the high level, as shown in Figure 3. Since the output signal S2 from the focus discriminating circuit 23 does not rise from the low level to the high level, and the switching to the focus control operation is not carried out before the time interval T1 elapses, the output signal S1 decays from the high level to the low level. Upon elapse of the preset time interval T2, the output signal S1 varies again from the low level to the high level to begin the preliminary focus control again. The foregoing cycle will be repeated. As a consequence, an instance in which the disc 28 is loaded upside down can be detected by detecting that the output signal S2 does not rise from the low level to the high level upon elapse of a normal time required for the preliminary focus control after the output signal S1 has risen from the low level to the high level.

This embodiment includes a timer 131 having a set terminal connected to an output terminal of the switching control circuit 25, and a reset terminal connected to an output terminal of the focus discriminating circuit 23. The set terminal of the timer 131 is supplied with the output signal S1 from the control circuit 25, while the reset terminal thereof is supplied with the output signal S2 from the focus discriminating circuit 23. The timer 131 starts measuring a time interval when the output signal S1 rises from the low level to the high level and stops such a time measurement when the output signal S2 rises from the low level to the high level. If the timer 131 after having started a time measurement measures a predetermined interval of time longer than the normal time for the preliminary focus control, the timer 131 supplies an output signal S3. The output signal S3 is supplied to the disc loading mechanism 32 and the warning circuit 33. In response to the output signal S3, the disc loading mechanism 32 unloads the disc 28 from the disc table 26, and the warning circuit 33 effects a warning action such as by presenting a warning indication or generating a warning sound.

Accordingly, in the case where the disc 28 is loaded upside down on the disc table 26, when the preliminary focus control is repeatedly started a predetermined number of times, for example, three times, and therefore, the timer 131 measures a time consumed by three cycles of the preliminary focusing control after a positive-going edge of the output signal S1 from the control circuit 25, it is determined that the laser beam from the pick-up 22 is falling on the back of the disc 28, and the timer 131 supplies the output signal S3. Consequently, it is detected that the disc 28 is loaded upside down. The output signal S3 then drives the disc loading mechanism 32 and the warning circuit 33. Although not shown, the output signal S3 from the timer 131 may be supplied to the voltage generating circuit 10 or the pickup 22 to stop its operation.

The disc presence discriminating means 34 as shown in Figure 5 may be added to the arrangement of Figure 6.

The invention can be used in a compact disc player, a video disc player, or an optical disc memory player.

## Claims

1. An optical disc player comprising a preliminary focus control circuit (10, 20, 21, 22, 23, 24, 25) for repeatedly effecting preliminary focus control to bring a focusing control circuit arrangement for a beam of light falling on a disc (28) into a mode of focus control operation;

characterised by:

detecting means (31: 131) for detecting repeated failure to achieve said mode of focus control operation;

whereby an instance in which said disc (28) is loaded with said beam of light falling on a non-information-recorded surface thereof can be detected on the basis of an output signal from said detecting means (31:131).

2. A player according to Claim 1 wherein said detecting means (31: 131) comprises a counter (31) supplied with a signal variable in response to start of said preliminary focus control from said preliminary focus control circuit (10, 20, 21, 22, 23, 24, 25), said output signal being generated when said counter (31) counts at least a predetermined number.

3. A player according to Claim 1 wherein said detecting means (31: 131) comprises a timer (131) supplied with a signal variable in response to start of said preliminary focus control from said preliminary focus control circuit (10, 20, 21, 22, 23, 24, 25) for starting measuring a time interval from an instant at which the first variation in the signal occurs, said output signal being generated when said timer (131) measures a predetermined time interval.

4. A player according to Claim 1, Claim 2 or Claim 3, further comprising disc detecting means (34) for detecting whether said disc (28) is present or not, said preliminary focus control circuit (10, 20, 21, 22, 23, 24, 25) being de-energizable in response to an output from said disc detecting means (34).

5. A player according to any one of the preceding claims further comprising a warning circuit (33) for indicating that said disc (28) is loaded with said beam of light falling on a non-information-recorded surface thereof in response to the output signal supplied from said detecting means (31:131).

6. A player according to any one of the preceding claims further comprising a disc loading mechanism (32) for unloading said disc (28) from a disc table (26) in response to the output signal supplied from said detecting means (31:131).

## Patentansprüche

1. Wiedergabegerät für optische Platten, das eine Vorfokussierungssteuerschaltung (10, 20, 21, 22, 23, 24, 25) enthält zum wiederholten Bewirken einer Vorfokussierungssteuerung, um eine Fokussierungssteuerschaltungsanordnung für einen Lichtstrahl, der auf eine Platte (28) fällt, in einen Betriebszustand für eine Fokussierungssteueroperation zu versetzen,

gekennzeichnet durch

ein Erfassungsmittel (31:131) zum Erfassen eines sich wiederholenden Fehlers, um den Betriebszustand für die Fokussierungssteueroperation zu erreichen,

wodurch ein Fall, bei dem die Platte (28) geladen ist, während der Lichtstrahl auf eine Oberfläche derselben ohne Informationsaufzeichnung fällt, auf der Grundlage eines Ausgangssignals des Erfassungsmittels (31:131) erfaßt werden kann.

2. Wiedergabegerät nach Anspruch 1, bei dem das Erfassungsmittel (31:131) aus einem Zähler (31) besteht, dem ein Signal, das in Reaktion auf den Start der Vorfokussierungssteuerung veränderbar ist, aus der Vorfokussierungssteuerschaltung (10, 20, 21, 22, 23, 24, 25) zugeführt wird, wobei das Ausgangssignal erzeugt wird, wenn der Zähler (31) zumindest eine vorbestimmte Anzahl von Impulsen abzählt.

3. Wiedergabegerät nach Anspruch 1, bei dem das Erfassungsmittel (31:131) aus einem Zeitgeber (131) besteht, dem ein Signal, das in Reaktion auf den Start der Vorfokussierungssteuerung veränderbar ist, aus der Vorfokussierungssteuerschaltung (10, 20, 21, 22, 23, 24, 25) zum Starten eines Abmessens eines Zeitintervalls von einem Zeitpunkt ab, zu dem die erste Veränderung des Signals auftritt, zugeführt wird, wobei das Ausgangssignal erzeugt wird, wenn der Zeitgeber (131) ein vorbestimmtes Zeitintervall abmißt.

4. Wiedergabegerät nach Anspruch 1, 2 oder 3, das außerdem ein Plattenerfassungsmittel (34) zum Erfassen enthält, ob die Platte (28) vorhanden oder nicht vorhanden ist, wobei die Vorfokussierungssteuerschaltung (10, 20, 21, 22, 23, 24, 25) in Reaktion auf ein Ausgangssignal des Plattenerfassungsmittels (34) abschaltbar ist.

5. Wiedergabegerät nach einem der vorhergehenden Ansprüche, das außerdem eine Alarmschaltung (33) enthält zum Anzeigen, daß die Platte (28) geladen ist, während der Lichtstrahl auf eine Oberfläche derselben ohne Informationsaufzeichnung fällt, in Reaktion auf das Ausgangssignal, das von dem Erfassungsmittel (31:131) zugeführt wird.

6. Wiedergabegerät nach einem der vorhergehenden Ansprüche das außerdem enthält einen Plattenlademechanismus (32) zum Entladen der Platte (28) von einem Plattenteller (26) in Reaktion auf das Ausgangssignal, das von dem Erfassungsmittel (31:131) zugeführt wird.

## Revendications

1. Lecteur de disque optique comprenant un circuit de commande de mise au point préliminaire (10, 20, 21, 22, 23, 24, 25) pour effectuer répétitivement la commande de mise au point préliminaire pour mettre à un mode de fonctionnement de commande de mise au point un agencement de circuit de commande de mise au point pour un faisceau de lumière arrivant sur un disque (28);

caractérisé par:

des moyens détecteurs (31:131) pour détecter le défaut réitéré d'exécution dudit mode de fonctionnement de commande de mise au point:

de sorte qu'un cas de chargement dudit disque (28) à une condition telle que ledit faisceau de lumière arrive sur une surface du disque non munie d'information enregistrée peut être décelé sur la base d'un signal de sortie provenant desdits moyens déteceurs (31:131).

2. Lecteur selon revendication 1, dans lequel lesdits moyens détecteurs (31:131) comprennent un compteur (31) auquel un signal variable est fourni en réponse au démarrage de ladite commande de mise au point préliminaire, à partir dudit circuit de commande de mise au point préliminaire (10, 20, 21, 22, 23, 24, 25), ledit signal de sortie étant généré lorsque ledit compteur (31) compte au moins un nombre prédéterminé.

3. Lecteur selon revendication 1, dans lequel lesdits moyens détecteurs (31:131) comprennent un organe de mesure de temps (131) auquel un signal variable est fourni en réponse au démarrage de ladite commande de mise au point préliminaire, depuis ledit circuit de commande de mise au point préliminaire (10, 20, 21, 22, 23, 24, 25), pour commencer la mesure d'un intervalle de temps à partir d'un instant où la première variation se produit dans le signal, ledit signal de sortie étant généré lorsque ledit organe de temps (131) mesure un intervalle de temps prédéterminé.

4. Lecteur selon revendication 1, revendication 2 ou revendication 3, comprenant en outre des moyens détecteurs de disque (34) pour déceler si le disque (28) est présent ou non, ledit circuit de commande de mise au point préliminaire (10, 20, 21, 22, 23, 24, 25) pouvant être neutralisé en réponse à une sortie provenant des desdits moyens détecteurs de disque (34).

5. Lecteur selon l'une quelconque des revendications précédentes, comprenant en outre un circuit avertisseur (33) pour indiquer, en réponse au signal de sortie fourni par lesdits moyens détecteurs (31:131), que ledit disque (28) est chargé et que ledit faisceau de lumière tombe sur une surface du disque non munie d'information enregistrée.

6. Lecteur selon l'une quelconque des revendications précédentes, comprenant en outre un mise au point de chargement de disque (32) pour décharger ledit disque (28) d'une table de disque (28), en réponse au signal de sortie fourni par lesdits moyens détecteurs (31:131).

FIG. 1

FIG. 2

FIG. 3

FIG. 4

4

FIG. 5

FIG. 6